# FASCICULE DE BREVET EUROPEEN

(11) **EP 2 712 745 B1**
(45) Date de publication et mention de la délivrance du brevet: **02.12.2015**
(21) Numéro de dépôt: 13186775.6
(22) Date de dépôt: 30.09.2013
(51) Int. Cl.: B60G 7/00, B62D 7/20

(54) **Biellette de direction avec manchon de renfort au flambage**
Lenkstange mit Verstärkungsbuchse
Track rod with reinforcement bush

(30) Priorité: 01.10.2012 FR 1259244
(43) Date de publication de la demande: 02.04.2014
(73) Titulaire: Jtekt Europe, 69540 Irigny (FR)
(72) Inventeur: Durand, Philippe, 69100 VILLEURBANNE (FR); Chapel, Vivien, 69005 lyon (FR)
(74) Mandataire: Chevalier, Renaud Philippe

(56) Documents cités:
- EP-A2- 1 205 319
- EP-B1- 0 846 611
- JP-A- H01 171 931
- US-A- 2 014 871
- US-A1- 2003 168 826
- US-A1- 2005 044 985
- US-A1- 2008 023 929

## Description

La présente invention se rapporte au domaine technique général des dispositifs de direction permettant de contrôler l'orientation d'un organe effecteur orientable de la direction d'un véhicule, et plus particulièrement de modifier et contrôler l'orientation de la ou des roues directrices d'un train roulant de véhicule, notamment de véhiculé automobile.

Elle concerne plus particulièrement les biellettes de direction destinées à transmettre les efforts de manoeuvre depuis l'extrémité d'une crémaillère de direction, elle-même mue à translation par une colonne de direction contrôlée par un volant de conduite, jusqu'au porte-fusée de la roue directrice correspondante.

Il est connu d'employer des biellettes pour transmettre des efforts mécaniques alternés de traction et de compression entre une crémaillère de direction et un porte-fusée afin de modifier l'orientation azimutale de ce dernier, et par conséquent de la roue qu'il porte.

L'une des difficultés usuellement rencontrées pour la mise en oeuvre de telles biellettes tient cependant à leur dimensionnement.

Lesdites biellettes doivent en effet satisfaire en pratique à deux critères antinomiques, en ceci qu'elles doivent d'une part présenter, en fonctionnement normal, une résistance mécanique suffisante pour ne pas se déformer plastiquement, notamment en traction et au flambage, sous les contraintes de manoeuvre, et d'autre part former un organe martyr qui, en cas de choc, c'est-à-dire au-delà d'un seuil d'effort prédéterminé, offre une déformation programmée, par flambage, afin de protéger le reste du système de direction ainsi que le porte-fusée.

A ce titre, il est connu, par exemple par le document US-2003/0168826, de réaliser une tige de biellette présentant globalement une section transverse relativement forte et d'usiner localement, dans ladite tige, généralement à proximité de l'interface avec le porte-fusée, une gorge fusible qui forme un tronçon de fragilisation au niveau duquel la déformation plastique pourra se produire de manière prévisible et contrôlée.

Cependant, un tel agencement peut parfois présenter certains inconvénients.

En effet, la réalisation de la gorge fusible ajoute une opération dans le processus de fabrication de la biellette, ce qui augmente le coût, la durée, et la dépense en énergie dudit processus.

En outre, il est parfois nécessaire, pour que les biellettes ainsi obtenues satisfassent au critère de résistance mécanique en fonctionnement normal, de conférer auxdites biellettes des sections de base importantes, notamment du côté de la crémaillère, qui rendent lesdites biellettes relativement massives, lourdes et encombrantes.

A ce titre, on connaît, notamment par les documents US-2 014 871 et EP-1 205 319, des renforts de type manchons qui permettent de renforcer une biellette, ou, respectivement, un organe de suspension.

Or, dans le domaine de la construction automobile, on cherche désormais à réduire systématiquement le poids des véhicules, et par conséquent celui de leurs différents organes constitutifs, ainsi que l'espace occupé par les différents systèmes embarqués.

Les objets assignés à l'invention visent par conséquent à remédier aux inconvénients susmentionnés et à proposer un nouveau type de biellette, et plus particulièrement de biellette de direction, qui d'une part concilie une bonne tenue mécanique vis-à-vis des efforts de manoeuvre normaux avec un comportement efficace et prévisible de déformation protectrice en cas de choc, qui d'autre part possède une structure relativement simple, légère et peu encombrante, et qui enfin soit peu onéreuse à fabriquer.

Les objets assignés à l'invention visent également à proposer un nouveau procédé de fabrication de telles biellettes, qui soit particulièrement économe en temps, en matière première et en énergie.

Les objets assignés à l'invention sont atteints au moyen d'une biellette pour mécanisme de liaison au sol d'un véhicule, du genre biellette de direction, biellette de suspension, ou biellette de stabilisation destinée par exemple à l'articulation d'une barre anti-roulis, ladite biellette comprenant une tige qui relie un premier élément d'articulation, destiné à venir assurer le raccordement et l'articulation de ladite biellette sur un organe de manoeuvre ou de retenue, du genre crémaillère de direction ou attache de châssis, à un second élément d'articulation, destiné à permettre le raccordement et l'articulation de ladite biellette sur un organe effecteur, tel qu'un porte-fusée ou une barre anti-roulis, le premier élément d'articulation et le second élément d'articulation étant fixés sur ladite tige, à distance l'un de l'autre, respectivement par une première interface de fixation et par une seconde interface de fixation, ladite biellette étant caractérisée en ce que la tige est étagée de sorte à présenter longitudinalement au moins un tronçon de tête puis un tronçon de queue plus fin que ledit tronçon de tête, et en ce que ladite biellette comprend un manchon de renfort intermédiaire, distinct des éléments d'articulation et des interfaces de fixation, qui est rapporté et engagé sur une portion de la longueur de la tige comprise entre le premier élément d'articulation et le second élément d'articulation, en étant enfilé sur le tronçon de queue, de sorte à pouvoir renforcer localement la section transverse de ladite tige.

Les objets assignés à l'invention sont plus particulièrement atteints au moyen d'une biellette de direction pour véhicule comprenant une tige-pivot sur laquelle est fixé un premier élément de rotule, destiné à venir assurer le raccordement et l'articulation de ladite biellette, par une première liaison rotule, sur un organe mobile de manoeuvre, du genre crémaillère de direction, ladite tige-pivot étant agencée pour matérialiser un pivot de ladite première liaison rotule et reliant ledit premier élément de rotule à un embout portant un second élément de rotule, destiné à permettre le raccordement et l'articulation de ladite biellette sur le support orientable d'un organe directeur, du genre porte-fusée, ladite biellette étant caractérisée en ce que la tige-pivot est étagée de sorte à présenter longitudinalement au moins un tronçon de tête puis un tronçon de queue plus fin que ledit tronçon de tête, et en ce que ladite biellette comprend un manchon de renfort, distinct des éléments de rotule et de l'embout, qui est rapporté et enfilé sur une portion de la longueur de la tige-pivot, en étant enfilé sur le tronçon de queue, de sorte à pouvoir renforcer localement la section transverse de ladite tige-pivot.

Les objets assignés à l'invention sont également atteints à l'aide d'un procédé de fabrication d'une biellette, notamment d'une biellette de direction, ledit procédé comprenant une étape (a) de réalisation d'une tige-pivot au cours de laquelle on rapporte ou l'on façonne à la première extrémité d'une tige, qui est étagée de sorte à présenter longitudinalement au moins un tronçon de tête puis un tronçon de queue plus fin que ledit tronçon de tête, un premier élément de rotule dont ladite tige forme le pivot, une étape (c) de renforcement au cours de laquelle on rapporte et on enfile sur une portion de ladite tige-pivot sur ledit tronçon de queue, un manchon de renfort, puis une étape (d) de mise en place d'un second élément de rotule, au cours de laquelle on rapporte sur la seconde extrémité de la tige correspondant au tronçon de queue un embout distinct du manchon de renfort et portant un second élément de rotule.

Avantageusement l'invention permet, au moyen d'un manchon convenablement dimensionné et positionné sur la tige de la biellette, d'apporter à ladite tige un renfort localisé qui optimise sa résistance mécanique, en particulier dans la zone identifiée comme critique car la plus exposée au flambage.

Ainsi, par un ajout de matière limité, qui permet d'augmenter localement le diamètre de la tige sur une portion de longueur prédéterminée, il est possible de réaliser un renforcement partiel qui procure l'augmentation voulue de la rigidité de ladite tige, notamment au voisinage de l'embout, sans qu'il soit nécessaire d'augmenter globalement la section de ladite tige sur toute sa longueur.

L'invention permet donc de réaliser une tige relativement fine, et ainsi d'économiser de la matière première et d'alléger globalement la biellette, tout en préservant les performances mécaniques de celle-ci, notamment vis-à-vis de la traction ou de la flexion sous compression.

En outre, l'agencement de la biellette conforme à l'invention en simplifie la fabrication, notamment en ce qu'il met en oeuvre un ajout ciblé de matière plutôt qu'un enlèvement de matière, et permet ainsi de réaliser l'économie d'une reprise d'usinage.

A ce titre, on remarquera que l'assemblage d'un manchon sur la tige représente une opération simple et rapide, qui peut de surcroît conférer au procédé une grande polyvalence, dans la mesure où il devient possible, le cas échéant, d'adapter facilement au cas par cas les propriétés de la biellette en sélectionnant une combinaison tige/manchon particulière parmi une gamme de tiges et de manchons, et/ou éventuellement en sélectionnant, à partir d'une même tige de base, un type et un positionnement de manchon particuliers parmi une pluralité de configurations de manchon possibles.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :
La figure 1 illustre, selon une vue de côté, une première variante de réalisation de biellette conforme à l'invention.
La figure 2 illustre, selon une vue de dessus avec coupe partielle, la biellette de la figure 1.
La figure 3 présente une vue de détail agrandie de la portion de la biellette de la figure 2 couverte par le manchon.
La figure 4 illustre, selon une vue d'ensemble en perspective, la biellette des figures 1 à 3.
La figure 5 illustre, selon une vue de côté, une seconde variante de réalisation de biellette conforme à l'invention.
La figure 6 illustre, selon une vue de dessus en coupe, la biellette de la figure 5.
La figure 7 présente une vue de détail agrandie de la portion de la biellette de la figure 6 couverte par le manchon.
La figure 8 illustre, selon une vue d'ensemble en perspective, la biellette des figures 5 à 7.

La présente invention concerne une biellette 1 pour mécanisme de liaison au sol d'un véhicule, telle que biellette de direction, biellette de suspension, ou biellette de stabilisation destinée par exemple à l'articulation d'une barre anti-roulis.

Par commodité de description, on fera préférentiellement, mais non limitativement, référence dans ce qui suit à une biellette de direction 1 pour véhicule, en particulier pour véhicule automobile.

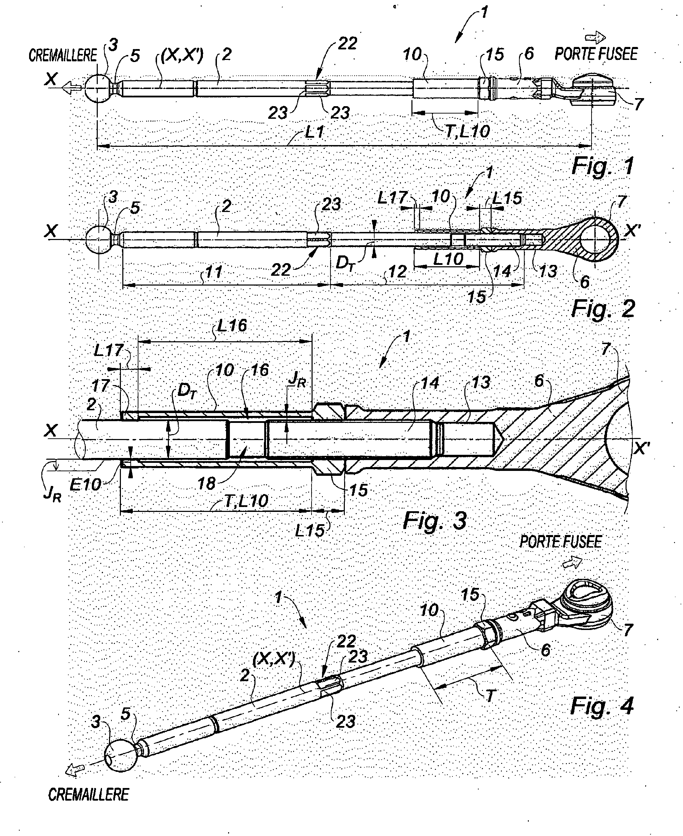

Tel que cela est illustré notamment sur les figures 1, 4, 5 et 8, ladite biellette 1 comprend une tige 2 qui relie un premier élément d'articulation 3, destiné à venir assurer le raccordement et l'articulation de ladite biellette 1 sur un organe de manoeuvre ou un organe de retenue, du genre crémaillère de direction ou attache de châssis, à un second élément d'articulation 7, destiné à permettre le raccordement et l'articulation de ladite biellette sur un organe effecteur, de préférence monté mobile sur le châssis du véhicule, tel qu'un porte-fusée ou une barre anti-roulis.

La tige s'étendra de façon particulièrement préférentielle en longueur entre lesdits éléments d'articulation 3, 7.

Les éléments d'articulation 3, 7 seront de préférence conçus pour former, respectivement avec l'organe de manoeuvre ou de retenue et avec l'organe effecteur, des liaisons autorisant chacune au moins un degré de liberté (par exemple en pivot), au moins deux degrés de liberté, voire au moins trois degrés de liberté (par exemple en rotule), notamment en rotation.

De façon préférentielle, mais non restrictive, lesdits éléments d'articulation 3, 7 formeront l'un et/ou l'autre un élément de rotule et pourront être, par simple commodité de description, considérés comme tels.

Plus particulièrement, ladite tige 2 pourra former une tige-pivot 2 sur laquelle est fixé un premier élément de rotule 3, formant le premier élément d'articulation et destiné à venir assurer le raccordement et l'articulation de ladite biellette 1, par une première liaison rotule 4, sur l'organe de manoeuvre ou sur l'organe de retenue (non représenté).

L'organe de manoeuvre, avantageusement mobile et dont, de préférence, le déplacement permet alternativement de pousser ou tirer la biellette 1, pourra notamment être du genre crémaillère de direction, et sera assimilé, par simple commodité de description, à une crémaillère dans ce qui suit.

De manière connue, ladite crémaillère sera de préférence guidée en translation dans un carter de direction, selon une direction sensiblement transverse à la direction longitudinale de déplacement du véhicule.

Le déplacement de ladite crémaillère pourra être provoqué et contrôlé par une colonne de direction comprenant un volant de conduite destiné à être actionné par le conducteur et pouvant agir, de préférence par l'intermédiaire d'un dispositif d'assistance de direction, préférentiellement électrique, sur un pignon engrenant sur ladite crémaillère.

De préférence, la tige-pivot 2 peut être agencée pour matérialiser un pivot de la première liaison rotule 4, et relie le premier élément de rotule 3 à un second élément de rotule 7, formant le second élément d'articulation et destiné à permettre le raccordement et l'articulation de ladite biellette 1 sur l'organe effecteur, et plus particulièrement sur le support orientable (non représenté) d'un organe directeur.

La tige 2 pourra donc former une tige-pivot, matérialisant de préférence un pivot commun aux deux liaisons rotules procurées par les éléments d'articulation 3, 7, et pourra être, par simple commodité de description, assimilée à une tige-pivot dans ce qui suit.

De préférence, le support orientable sera du genre porte-fusée, et considéré comme tel dans ce qui suit, par simple commodité de description.

L'organe directeur pourra notamment être formé par une roue directrice, constituant le cas échéant également une roue motrice, qui sera avantageusement portée par ledit porte-fusée, de telle sorte que la transmission de mouvement assurée par la biellette 1 entre l'organe de manoeuvre (crémaillère) et le support orientable (porte-fusée) permettra de modifier et contrôler l'orientation azimutale de l'organe directeur (roue), et ainsi la trajectoire du véhicule.

Ainsi, dans le cas d'un système de direction, une biellette 1 de direction conforme à l'invention assurera avantageusement la liaison entre d'une part un organe de manoeuvre mobile, du genre crémaillère de direction, et d'autre part un organe effecteur qui forme le support orientable, du genre porte-fusée, d'un organe directeur (roue directrice).

Dans le cas d'un système de barre anti-roulis, une biellette 1 de stabilisation conforme à l'invention pourra assurer la liaison entre une attache fixe du châssis et l'étrier mobile de la barre anti-roulis.

Dans le cas d'un système de suspension, une (ou des) biellette(s) 1 conforme(s) à l'invention pourra(ont) assurer la liaison entre une attache fixe du châssis et un support de roue, notamment un porte-fusée, par exemple au sein d'un triangle de suspension.

Selon l'invention, le premier élément d'articulation 3 et le second élément d'articulation 7 sont fixés sur la tige 2, à distance l'un de l'autre, respectivement par une première interface de fixation 5 et par une seconde interface de fixation 6.

Quelles que soient par ailleurs la destination de la biellette et la nature des éléments d'articulation 3, 7, la première et la seconde interface de fixation 5, 6 pourront être l'une et/ou l'autre venue(s) de matière avec la tige 2, et par exemple se présenter sous la forme d'un (ou deux) col(s) 5.

*A contrario,* l'une et/ou l'autre des interfaces de fixation 5, 6 pourra être formée par un embout distinct de la tige 2, rapporté et fixé sur ladite tige 2, et de préférence amovible de ladite tige 2, embout 6 qui porte l'élément d'articulation 3, 7 correspondant.

De préférence, tel que cela est illustré sur les figures 1 à 8, la biellette 1 comprendra une interface de fixation, de préférence la première, venue de matière avec la tige (ici, un col 5), et l'autre interface de fixation, de préférence la seconde, rapportée (ici, un embout 6 portant le second élément d'articulation 7).

De préférence, tel que cela est notamment illustré sur les figures 1, 2, 4 et 6, le premier élément d'articulation 3, et en particulier le premier élément de rotule, pourra être formé par une sphère.

Ledit premier élément d'articulation 3, et plus particulièrement ladite sphère, sera préférentiellement formé(e) d'un seul tenant avec la tige-pivot 2 à laquelle il (elle) peut être relié(e) par un col 5 resserré.

Tel que cela est illustré notamment sur les figures 1, 2, 4 et 6, le second élément de rotule 7 pourra être formé par un palier sphérique, dans lequel peut venir s'emboîter une sphère de forme conjuguée, elle-même solidaire du porte-fusée.

Bien entendu, le premier et le second élément de rotule 3, 7 pourront être formés chacun librement, indépendamment l'un de l'autre, soit par une sphère, soit par un palier sphérique, sans sortir du cadre de l'invention.

Par ailleurs, tel que cela est illustré notamment sur les figures 1, 4, 5 et 8, le premier élément d'articulation 3 d'une part, et le second élément d'articulation 7 d'autre part, ici préférentiellement porté par l'embout 6, seront de préférence fixés à l'opposé l'un de l'autre, chacun occupant respectivement l'une des extrémités de la biellette 1.

Selon l'invention, la biellette 1 comprend un manchon de renfort 10 intermédiaire, distinct des éléments d'articulation 3, 7 et des interfaces de fixation 5, 6, qui est rapporté et engagé sur une portion T de la longueur de la tige 2 comprise entre le premier élément d'articulation 3 et le second élément d'articulation 7, et de préférence, plus particulièrement, entre la première interface de fixation 5 et la seconde interface de fixation 6, de sorte à pouvoir renforcer localement la section transverse de ladite tige 2.

Plus particulièrement, la biellette 1 pourra comprendre un manchon de renfort 10, distinct des éléments de rotule 3, 7 et de l'embout 6, ledit manchon 10 étant rapporté et enfilé sur une portion T de la longueur de la tige-pivot 2 de sorte à pouvoir renforcer localement la section transverse de ladite tige-pivot.

Avantageusement le cerclage, longitudinalement partiel, de la tige 2 par un manchon 10 au contour fermé, qui recouvre localement ladite tige 2, le cas échéant en l'enserrant, permet de renforcer ladite tige-pivot 2 au moyen d'une structure simple, économe en matière, et facile à assembler.

La portion de la longueur (ou « tronçon ») T de la tige-pivot ainsi recouverte par le manchon 10 pourra être définie par simulation au moyen de calculs d'efforts, par exemple par éléments finis, et/ou par des campagnes d'essais.

Elle correspondra de préférence à la portion de la tige 2 la plus exposée au flambage, c'est-à-dire à la zone qui tend à présenter la flèche maximale, et/ou qui est la première à voir apparaître une déformation plastique irréversible, sous une contrainte de compression axiale déterminée.

Bien entendu, la tige 2, et plus globalement la biellette 1, sera conçue et dimensionnée de sorte à présenter une rigidité appropriée, en particulier pour transmettre alternativement les contraintes de traction et de compression nécessaires pour respectivement tirer ou repousser le porte-fusée afin de faire pivoter ce dernier.

En particulier, la tige 2 sera conçue pour être sensiblement inextensible axialement, c'est-à-dire pour ne pas subir, en conditions normales et prévisible de fonctionnement, de déformation plastique sous contrainte de traction axiale.

De préférence, ladite tige 2 pourra se présenter globalement sous la forme d'un cylindre plein, de préférence de section transverse sensiblement circulaire.

Par ailleurs, la tige 2 s'étendra de préférence continûment, d'un seul tenant, au moins sur toute la longueur du tronçon T renforcé par le manchon 10, et de façon particulièrement préférentielle, sur (au moins) toute la longueur comprise entre la première et la seconde interface de fixation 5, 6.

La tige 2 pourra être réalisée dans tout matériau rigide approprié, notamment métallique ou même composite fibré, et par exemple en acier, ce qui permet notamment une fabrication par frappe à froid.

Ladite tige 2 pourra avantageusement être protégée de la corrosion par un traitement ou un revêtement idoine, du genre peinture ou dépôt électrolytique de type zinc lamellaire.

Bien qu'elle puisse prendre diverses formes sans sortir du cadre de l'invention, la biellette 1 sera de préférence allongée et étroite, sa dimension transverse, et plus particulièrement le diamètre maximal hors-tout de la tige 2, étant inférieure, et de préférence plusieurs fois inférieure, à sa dimension longitudinale, et plus particulièrement à la longueur de l'entraxe L1 de séparation que ladite biellette définit entre le centre du premier élément d'articulation 3, et plus particulièrement du premier élément de rotule 3 (c'est-à-dire le centre de la première rotule 4) et le centre du second élément d'articulation 7, et plus particulièrement du second élément de rotule 7.

Un tel agencement permet en effet un gain de masse et d'encombrement.

La tige 2 sera par ailleurs préférentiellement droite, et générée à cet effet par un axe générateur (XX') longitudinal rectiligne, autour duquel elle forme de préférence sensiblement un cylindre de révolution, tel que cela est illustré sur les figures 1 à 8.

De préférence, le manchon 10 sera centré sur ledit axe générateur (XX'), de manière coaxiale à ce dernier et donc à la tige 2.

Ledit manchon 10 pourra quant à lui préférentiellement se présenter sous la forme d'une bague dont l'alésage forme un cylindre droit de base circulaire.

Quel que soit par ailleurs l'agencement du manchon 10, la biellette 1 pourra quant à elle être globalement rectiligne, l'embout 6 pouvant à cet effet être sensiblement rectiligne et fixé de manière coaxiale dans le prolongement longitudinal de l'axe générateur (XX'), tel que cela est illustré ici sur les figures 1 à 4.

*A contrario,* quel que soit l'agencement du manchon 10, la biellette pourra être coudée, et présenter, au moins localement, et plus particulièrement au niveau de l'embout 6, un tracé incurvé permettant par exemple un déport transverse, de type excentration, du centre du second élément d'articulation 7, et plus particulièrement du second élément de rotule 7, par rapport à l'axe générateur (XX') de la tige-pivot 2.

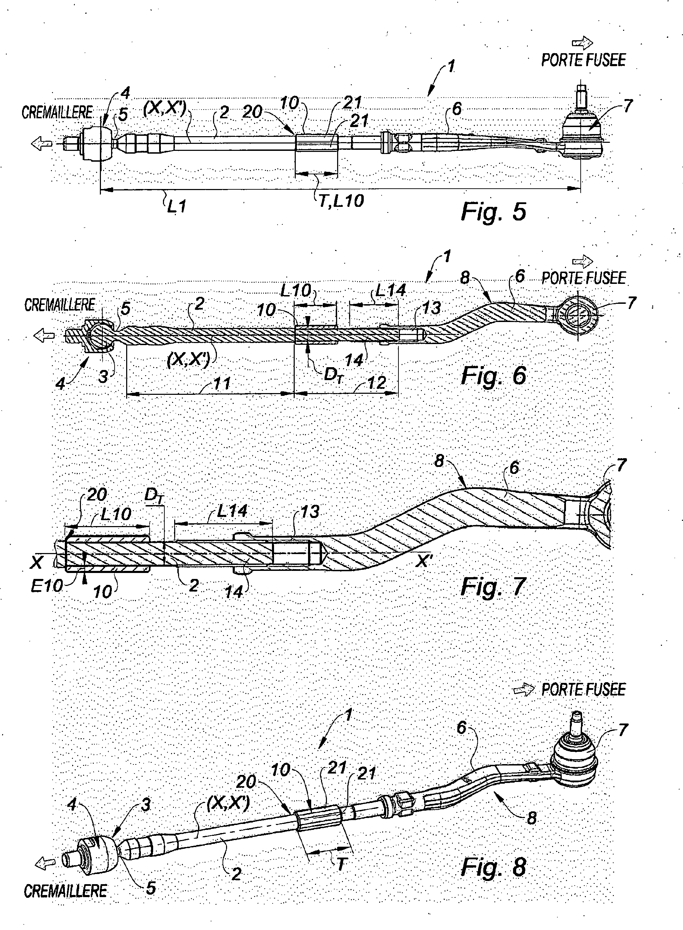

A cet effet, l'embout 6, qui vient se connecter à la tige-pivot 2 en bout, initialement dans le prolongement de celle-ci, pourra présenter un ou plusieurs coudes 8, tel que cela est illustré sur les figures 5 à 8.

On remarquera que, selon la configuration souhaitée, le centre du premier élément de rotule 3 et/ou le centre du second élément de rotule 7 pourront (ou non) être situés l'un et/ou l'autre sur l'axe générateur (XX'). A ce titre, on notera que la première variante des figures 1 à 4 présente ici une configuration dans laquelle ces deux centres sont situés sur l'axe (XX')

Bien entendu, l'invention concerne également un système de direction et/ou un châssis de véhicule intégrant au moins une, et de préférence deux, biellette(s) 1 selon l'invention.

L'invention concerne en particulier en tant que tel un mécanisme de direction pour véhicule comprenant au moins un organe de manoeuvre, du genre crémaillère de direction, monté mobile, sous la dépendance d'un volant de conduite, dans un carter de direction destiné à être fixé sur un élément de châssis du véhicule, ledit mécanisme de direction comportant au moins une biellette de direction 1 selon l'invention, biellette de direction 1 dont le premier élément d'articulation 3 assure la jonction et l'articulation avec ledit organe de manoeuvre, et dont le second élément d'articulation 7 est agencé pour permettre le raccordement et l'articulation de ladite biellette sur un organe effecteur qui forme un support orientable d'un organe directeur, du genre porte-fusée.

L'invention concerne également en tant que tel un véhicule (non représenté), et notamment un véhicule terrestre à roues destiné au transport individuel ou collectif de personnes ou de marchandises, qui est équipé d'au moins une, et de préférence au moins deux, biellettes 1, notamment une ou des biellettes de direction conformes à l'invention, et/ou d'un mécanisme de direction conforme à l'invention.

Ceci étant, il est bien entendu envisageable d'appliquer l'invention à la commande d'un organe directeur de type gouvernail, équipant par exemple un véhicule de type navire ou aéronef.

Du reste, le concept de l'invention est parfaitement généralisable à tout type de biellettes, et plus particulièrement, tel que cela a été détaillé plus haut, aux biellettes destinées aux châssis, aux trains roulants, aux organes de suspension, et plus globalement aux liaisons au sol de véhicules de toutes sortes.

Bien entendu, l'une et/ou l'autre des caractéristiques présentées dans la description pourront être mises en oeuvre, individuellement ou en combinaison les unes avec les autres, au sein de telles biellettes.

De préférence, tel que cela est illustré sur les figures 2, 3, 6 et 7, le manchon 10 possède une longueur L10 supérieure ou égale à une fois, préférentiellement à 1,5 fois, à deux fois, voire à trois fois, le diamètre de base D_{T} du tronçon T de la tige-pivot 2 sur lequel ledit manchon est engagé, et plus particulièrement enfilé.

Préférentiellement, ladite longueur L10 sera inférieure ou égale à cinq fois, voire à dix fois, ledit diamètre de base D_{T} du tronçon T de la tige-pivot 2 sur lequel ledit manchon est engagé.

Bien entendu, la longueur L10 du manchon pourra notamment être sensiblement comprise dans toute plage résultant de l'application, librement combinée, de l'une ou l'autre des bornes susmentionnées.

De telles proportions procurent avantageusement au manchon une étendue qui est suffisante pour conférer audit manchon 10 une portée d'étayage efficace, et par conséquent à la biellette 1 une bonne stabilité, notamment vis-à-vis du flambage, tout en étant suffisamment limitée pour minimiser la masse de l'ensemble.

A titre indicatif, la longueur L10 du manchon pourra être sensiblement comprise entre 10 mm et 100 mm.

Le diamètre de base D_{T} de la tige-pivot 2 au niveau du tronçon renforcé T, et plus globalement le diamètre ou les diamètres successifs de la tige-pivot 2, pourront quant à eux être de préférence sensiblement compris entre 10 mm et 20 mm, voire 30 mm environ.

Par ailleurs, l'épaisseur E10 de la paroi du manchon 10, qui correspond à la surépaisseur radiale que ledit manchon apporte à la tige-pivot, autour du tronçon T qu'il habille, pourra représenter 15 % à 50 % du rayon de base correspondant de la tige-pivot 2 (ici D_{T}/2), soient, à titre d'exemple, environ 2 mm à 5 mm.

Tel que cela est notamment visible sur les figures 2 et 6, la tige 2 est étagée de sorte à présenter longitudinalement au moins un tronçon de tête 11 puis un tronçon de queue 12 plus fin que ledit tronçon de tête 11.

Ledit tronçon de queue 12 présente ainsi globalement un diamètre moyen, voire, absolument, un diamètre maximal, qui est strictement inférieur au diamètre moyen, respectivement au plus petit diamètre, du tronçon de tête 11.

La tige 2 peut ainsi être divisée longitudinalement, le long de son axe (XX'), en au moins deux tronçons 11, 12 dont le premier tronçon, le tronçon de tête 11, qui est de préférence orienté vers le premier élément d'articulation, et plus particulièrement vers le premier élément de rotule 3 et la crémaillère, présente une section transverse forte et donc une grande rigidité, et dont le dernier tronçon, le tronçon de queue 12, qui est de préférence orienté vers le second élément d'articulation, et plus particulièrement vers le second élément de rotule 7 et le porte-fusée, présente une section transverse plus faible, et par conséquent notamment une raideur en traction et un module d'inertie en flexion moindres.

De ce fait, la déformation au flambage de la tige 2 aurait plutôt tendance à survenir dans le tronçon de queue, du côté de la biellette 1 proche du porte-fusée sur les figures.

C'est pourquoi le manchon 10 sera enfilé sur le tronçon de queue 12, et plus particulièrement exclusivement sur ledit tronçon de queue 12.

Un tel agencement permettra non seulement de cibler le renforcement sur la partie de la tige 2 *a priori* la plus fragile, mais également de faciliter le montage de la biellette, le manchon se trouvant en effet captif du tronçon de queue 12 et guidé longitudinalement par celui-ci, et le tronçon de tête 11 pouvant former le cas échéant une butée de retenue axiale à l'encontre dudit manchon 10.

A titre indicatif, le tronçon de queue 12 pourra représenter 25 % à 80 %, et préférentiellement environ 50 %, de la longueur totale de la tige 2, voire de l'entraxe L1 défini par la biellette 1.

Le tronçon renforcé T pourra quant à lui être inclus dans une zone longitudinalement comprise entre 35 % et 85 % environ de l'entraxe L1 défini par la biellette, ladite zone étant préférentiellement située du côté du porte-fusée (c'est-à-dire définie en appliquant les bornes 35 % - 85 % dans le sens des abscisses croissantes, en partant du premier élément de rotule 3 pour aller vers le second élément de rotule 7).

De préférence, tel que cela est illustré sur les figures 2, 3, 6 et 7, et quelle que soit la variante de réalisation envisagée, l'embout 6 portant le second élément d'articulation 7, de préférence un second élément de rotule, présente un trou taraudé 13 qui reçoit une extrémité filetée mâle 14 correspondante de la tige-pivot 2, et plus particulièrement du tronçon de queue 12, pour assurer la fixation dudit embout 6 sur ladite tige 2.

Avantageusement, un tel mode d'assemblage offre notamment une possibilité d'ajustement de la longueur de la biellette, et donc de l'entraxe L1, et par conséquent un moyen de réglage du parallélisme de la direction du véhicule.

Plus globalement, on remarquera que l'assemblage de l'embout 6 sur la tige 2 est préférentiellement réversible, l'embout 6 restant ainsi réglable en position axiale, voire de préférence amovible.

Bien entendu, on pourrait retrouver, *mutatis mutandis,* un tel agencement d'assemblage par vissage si l'on envisageait l'utilisation, en lieu et place du col 5, d'un autre embout rapporté sur la tige 2 et qui porterait quant à lui le premier élément d'articulation 3.

De préférence, le trou taraudé 13 sera borgne, et destiné à venir coiffer l'extrémité 14 de la tige-pivot 2 sensiblement dans le prolongement coaxial de l'axe générateur (XX').

A titre indicatif, la longueur filetée L14 de l'extrémité de la tige-pivot 2 pourra être de l'ordre de 30 mm à 100 mm.

Par ailleurs, on remarquera que, en utilisant un ou deux embouts 6 initialement séparé(s), voire ultérieurement séparable(s), de la tige 2, l'une et/ou l'autre des extrémités correspondantes de la tige 2 est avantageusement rendue accessible lors de l'assemblage de la biellette.

Le manchon 10 pourra alors avantageusement être rapporté et enfilé axialement sur la tige 2, lors de l'assemblage de la biellette, par l'une des extrémités de ladite tige 2, puis positionné axialement et fixé en position. L'opération d'assemblage s'en trouvera bien entendue simplifiée.

A ce titre, le manchon 10 sera de préférence formé par un élément tubulaire monolithique.

*A contrario,* et en particulier si les interfaces de fixation 5, 6 sont venues de matière avec la tige 2 et inamovibles, au point de faire obstacle à l'insertion axiale du manchon 10, ledit manchon 10 pourra avantageusement être initialement fractionné en plusieurs parties, de type coques, et par exemple en deux coques hémi-cylindriques, afin de pouvoir être rapporté sur la tige 2 par abord radial, avant d'être reconstitué autour de ladite tige 2.

Les coques pourront par exemple être réunies, de façon réversible ou au contraire irréversible, par clippage, vissage, sertissage, soudage, ou tout autre procédé approprié.

Selon une variante particulièrement préférentielle de réalisation, qui peut constituer une invention en tant que telle, le manchon 10 est venu de matière avec un contre-écrou 15 qui est lui-même vissé sur l'extrémité mâle filetée 14 de la tige-pivot 2 de sorte à épauler l'embout 6 portant le (second) élément d'articulation 7, tel que cela est illustré sur les figures 1 à 4.

En utilisant ainsi une seule et même pièce qui réunit d'un seul tenant un contre-écrou 15 et un manchon 10 prolongeant ledit contre-écrou, coaxialement à ce dernier et à l'opposé de l'embout 6 (et donc ici du porte-fusée), on peut avantageusement combiner deux fonctions, à savoir d'une part le renforcement de la biellette 1 vis-à-vis du flambage, dans un tronçon T particulièrement vulnérable qui jouxte (et en l'espèce précède, dans le sens des abscisses croissantes) immédiatement l'embout 6, et d'autre part le blocage efficace, par épaulement du contre-écrou 15 contre le chant du trou fileté 13 de l'embout 6, du réglage par vissage de la longueur de la biellette (c'est-à-dire plus particulièrement du réglage statique du parallélisme de la direction) dans la configuration souhaitée.

De préférence, le diamètre externe hors-tout du manchon 10 est inférieur à celui du contre-écrou 15, ce dernier formant ainsi un chapeau de manoeuvre pourvu d'une pluralité de méplats radialement saillants qui permettent une préhension facile pour le geste de vissage nécessaire au serrage ou au desserrage du contre-écrou 15 contre l'embout 6.

Du reste, il n'est pas exclu que le manchon 10 placé dans le prolongement du contre-écrou 15 comporte lui-même des méplats de manoeuvre, le cas échéant sur toute sa longueur, par exemple de manière analogue à ce qui est décrit plus bas en référence aux figures 5 à 8.

De préférence, en particulier sur cette première variante de réalisation des figures 1 à 4, l'alésage interne du manchon 10 présente un diamètre supérieur à celui D_{T} de la portion T de la tige 2 sur laquelle ledit manchon 10 est enfilé, de sorte à préserver un jeu radial J_{R} entre ladite tige 2 et ledit manchon 10, en particulier lorsque la biellette se trouve au repos ou en fonctionnement normal.

Avantageusement, un tel agencement de type glissant permet d'enfiler aisément, au repos, le manchon 10 sur la tige-pivot 2 et de visser librement le contre-écrou 15 sur le filetage de ladite tige, notamment pour permettre le réglage de la longueur de la biellette puis le blocage de l'embout 6, sans friction du manchon au contact de la tige-pivot, ni *a fortiori* détérioration de l'une ou l'autre de ces pièces lors de l'assemblage ou du réglage de la biellette.

De préférence, le jeu radial J_{R} sera en revanche destiné à être rattrapé par la flexion relative du tronçon T au sein du manchon 10, lorsque la flèche de la tige-pivot 2 atteindra une valeur de flambage suffisante, prédéterminée, pour permettre à ladite tige-pivot 2 de venir au contact de la paroi interne dudit manchon.

Ainsi, le renforcement actif dudit tronçon T est provoqué automatiquement par l'augmentation de raideur qui résulte de l'entrée au contact de la tige-pivot 2 avec le manchon 10, lorsque ladite tige 2 s'arque suffisamment au sein dudit manchon 10 pour que ce dernier vienne former un étai à l'encontre du tronçon T qu'il couvre.

De préférence, le jeu radial J_{R} est à ce titre dimensionné, et en particulier suffisamment faible, pour que ce contact s'établisse rapidement, au début du flambage, dans des conditions de flexion prévisibles, représentatives d'une situation de choc.

Le jeu radial J_{R} pourra par ailleurs être, le long du manchon, et donc du tronçon T que celui-ci entoure, sensiblement constant, ou au contraire variable, notamment par paliers, tel que cela est par exemple illustré sur la figure 3.

A titre d'exemple, ledit jeu radial J_{R} pourra être sensiblement compris entre 0,1 mm et 0,5 mm environ, au moins dans la ou les portions du manchon 10 les plus proches de la tige 2.

Selon une variante de réalisation, le tronçon T de la tige-pivot 2 destiné à recevoir le manchon 10 pourra présenter un ajustement glissant de type « H » (de H8 à H10 par exemple), tandis que l'alésage du manchon présentera, au moins dans sa section la plus étroite, un ajustement de type « d », « e », voire « f » (du genre e7, e8 ou e9, par exemple).

Selon un agencement préférentiel, illustré sur les figures 2 et 3, l'alésage du manchon 10 pourra présenter une chambre 16 intermédiaire, de préférence lisse, au sein de laquelle le jeu radial est relativement important et permet au manchon 10 d'être largement distant et décollé de la tige 2.

Ladite chambre 16 intermédiaire sépare avantageusement le contre-écrou 15 d'un patin de touche 17 annulaire, de préférence lisse, qui forme, à l'extrémité du manchon opposée au contre-écrou 15, un resserrement autour de la tige-pivot 2.

Au niveau de ce resserrement, le jeu radial est inférieur à celui qui existe dans la chambre 16, et peut de préférence être de type ajustement glissant tel que décrit ci-dessus.

Selon une telle configuration alliant chambre 16 et patin(s) de touche 17, le jeu radial J_{R} pourra être sensiblement compris entre 0,1 mm et 0,5 mm, voire moins, au niveau du (ou des) patin(s) de touche 17, sur la longueur L17 de ce dernier, et de 1 mm à 5 mm sur le reste de la longueur du manchon 10, et/ou plus particulièrement sur la longueur L16 de la chambre 16.

Avantageusement, le patin de touche 17, plus proche de la surface de la tige-pivot 2, et de préférence plus épais que la paroi de la chambre 16, formera, à distance du point d'attache que forme le contre-écrou 15, et plus particulièrement à l'opposé de la chambre 16 par rapport à ce dernier, une surface d'entrée en contact privilégiée de ladite tige-pivot 2 avec le manchon 10 lors du flambage.

Le dégagement intermédiaire offert par la chambre 16 peut notamment simplifier l'usinage et la finition de l'alésage du manchon, et faciliter l'engagement sans interférence dudit manchon 10 sur la tige-pivot 2, grâce à la portée libre que ladite chambre ménage entre le filet du contre-écrou 15 d'une part et l'appui glissant du patin de touche 17 d'autre part.

De préférence, la chambre 16 s'étend à ce titre longitudinalement sur la majorité, et plus particulièrement sur au moins 50 %, au moins 60 % voire au moins 75 % ou 80 % de la longueur L10 du manchon.

Selon une variante de réalisation préférentielle, la longueur L17 occupée par le patin de touche 17, et la longueur L15 occupée par le contre-écrou 15, qui peuvent du reste être égales ou différentes l'une de l'autre, seront de préférence comprises entre 0,20 fois et 1,50 fois le diamètre D_{T} de la tige-pivot 2 dans la zone correspondante.

Eventuellement, tel que cela est illustré sur la figure 3, le tronçon T couvert par le manchon 10 peut comporter une gorge 18, par exemple destinée à former un dégagement d'outil lors de la réalisation du filetage 14 de la tige-pivot 2, gorge 18 que le manchon enjambe avantageusement pour pouvoir former un pont raidisseur.

Selon une variante de réalisation qui peut notamment correspondre à celle illustrée sur les figures 5 à 8, le manchon 10 est fixé sur la tige 2 à distance (axiale) de l'embout 6 portant le second élément d'articulation 7, et, de façon préférentielle, contre un épaulement 20 formé par le tronçon de tête 11.

Plus particulièrement, ledit épaulement 20 pourra avantageusement être formé par l'étagement de transition entre le tronçon de tête 11 et le tronçon de queue 12.

Avantageusement, un tel agencement permet un assemblage facile, rapide, reproductible et stable du manchon 10 sur la tige-pivot 2, par glissement dudit manchon sur la portion de queue 12 jusqu'à mise en butée axiale dudit manchon contre l'épaulement 20.

Il permet en outre de renforcer cette fois un tronçon T intermédiaire, situé à distance à la fois du premier élément de rotule 3 et de l'embout 6, et plus particulièrement situé au voisinage immédiat de la transition entre le tronçon de tête 11, fort, et le tronçon de queue 12, moins massif, ici de préférence environ à mi-longueur de la tige-pivot 2.

A l'opposé de l'épaulement 20, le chant libre du manchon 10 sera de préférence placé affleurant ou en retrait de la portion filetée 14 de l'extrémité de la tige, par exemple entre 0 (zéro) mm et 30 mm en retrait du début dudit filet.

Plus globalement, le manchon 10 pourra se situer sur la tige 2 à distance de chacune des interfaces de fixation 5, 6, tel que cela est notamment illustré sur les figures 5 à 8.

Selon une possibilité de réalisation, tel que cela est notamment le cas sur la variante des figures 5 à 8, le manchon 10 est monté radialement serré sur la tige 2.

Ainsi, on supprimera de préférence les degrés de liberté du manchon 10 par rapport à la tige 2 en rotation autour de l'axe générateur (XX') et en translation longitudinale le long dudit axe.

A cet effet, on pourra utiliser tout procédé de fixation approprié, tel qu'emmanchement ou sertissage sous presse, avantageusement rapide et économe à mettre en oeuvre, mais aussi collage, soudage, etc.

Le diamètre interne du manchon 10 sera alors avantageusement ajusté serré par rapport à celui D_{T} de la tige-pivot.

De préférence, le tronçon T de la tige-pivot sur lequel vient s'accrocher le manchon 10, et/ou l'alésage du manchon 10 lui-même, seront sensiblement lisses.

Toutefois, l'un et/ou l'autre pourront toutefois présenter, le cas échéant, des reliefs d'accroche, du genre stries ou cannelures, voire un filetage, destinés à conférer aux surfaces concernées une rugosité améliorant l'ancrage du manchon 10 sur la tige-pivot 2.

Selon une caractéristique préférentielle qui peut constituer une invention à part entière, indépendamment ou en combinaison avec l'une ou l'autre des caractéristiques susmentionnées, le manchon 10 présente sur sa face externe une pluralité de méplats 21 répartis, de préférence régulièrement, autour de son axe générateur (XX').

En particulier ledit manchon 10 pourra notamment former un manchon à quatre ou six pans, tel que cela est illustré sur les figures 5 à 8.

Avantageusement, les méplats 21 permettent une préhension efficace du manchon, et par conséquent de la tige-pivot 2 dont il est solidaire, et offrent ainsi une prise pour la manoeuvre en rotation de ladite tige-pivot 2, lors des opérations de vissage/dévissage sur l'embout 6, en particulier lors du réglage du parallélisme de la direction.

Les méplats 21 pourront s'étendre sur une partie, ou de préférence sur la totalité de la longueur L10 du manchon.

Par ailleurs, il est à noter que sur la première variante de réalisation correspondant aux figures 1 à 4, cette fonction de préhension de la tige-pivot 2 est dévolue à un tronçon de préhension 22 porteur de méplats 23, de préférence mis en forme directement, de manière monobloc, sur la tige-pivot 2, et situé par exemple sensiblement à mi-longueur de ladite tige-pivot 2, à la transition entre tronçon de tête 11 et tronçon de queue 12.

Bien entendu, l'invention n'est nullement limitée aux variantes de réalisation décrites, l'homme du métier étant à même de l'adapter, notamment en isolant ou en combinant entre elles l'une ou l'autre des caractéristiques détaillées plus haut, voire en inversant le sens d'agencement de la biellette par rapport à la crémaillère et au porte-fusée.

L'invention concerne par ailleurs également un procédé de fabrication d'une biellette 1, et plus particulièrement d'une biellette de direction 1, ledit procédé comprenant une étape (a) de réalisation d'une tige-pivot 2 au cours de laquelle on rapporte ou l'on façonne à la première extrémité d'une tige 2, correspondant de préférence au tronçon de tête 11 susmentionné, un premier élément de rotule 3 dont ladite tige 2 forme le pivot, une étape (c) de renforcement au cours de laquelle on rapporte et on enfile sur une portion T de ladite tige-pivot 2, et plus particulièrement sur le tronçon de queue 12 susmentionné, un manchon de renfort 10, puis une étape (d) de mise en place d'un second élément de rotule, au cours de laquelle on rapporte sur la seconde extrémité 14 de la tige 2, correspondant de préférence au tronçon de queue 12, un embout 6 distinct du manchon de renfort 10 et portant un second élément de rotule 7.

De façon particulièrement préférentielle, ledit procédé comprend une étape (b) de filetage au cours de laquelle on façonne un filet à la seconde extrémité 14 de la tige-pivot, de préférence par roulage.

Lors de l'étape (d) de mise en place, on pourra ainsi visser sur ladite seconde extrémité 14 l'embout 6 portant un second élément de rotule 7.

La tige 2, ainsi que le premier élément de rotule 3, pourront être fabriqués d'un seul tenant, à partir d'un même rondin métallique, par exemple par un procédé de frappe à froid.

Le cas échéant, on pourra procéder à un usinage complémentaire du col 5 et de la sphère formant le premier élément de rotule 3, ainsi qu'à un galetage de ladite sphère.

Le roulage du filet pourra avantageusement être réalisé directement sur le diamètre brut, de préférence constant, du tronçon de queue 12, ce qui permet d'économiser de la matière, de l'énergie, et d'améliorer la tenue mécanique du filet par écrouissage.

L'assemblage est quant à lui particulièrement simplifié, le manchon 10, initialement séparé de la tige 2, étant enfilé sur celle-ci par l'une de ses extrémités, en l'espèce le tronçon de queue 12, en direction de l'autre extrémité, ici le tronçon de tête 11.

Sur la première variante de réalisation des figures 1 à 4, il sera nécessaire de visser le contre-écrou 15 pour l'engager, avec le manchon 10, le long de l'extrémité filetée 14, afin de permettre le vissage subséquent de l'embout 6, toujours depuis la même extrémité 14, selon un accès particulièrement aisé. Une fois atteinte la longueur (entraxe L1) convenable de la biellette, le manchon 10 et le contre-écrou 15 sont solidairement ramenés axialement par vissage en sens inverse, jusqu'à ce que le contre-écrou vienne se serrer contre l'embout 6 pour verrouiller l'ensemble en position.

Sur la seconde variante des figures 5 à 8, on pourra d'abord descendre le manchon jusqu'au tronçon T à renforcer, et le rendre captif de ce dernier par emmanchement en force. L'embout 6 sera ensuite rapporté et vissé sur l'extrémité filetée 14, les méplats 21 du manchon 10 offrant avantageusement, pendant cette opération, une prise permettant d'exercer solidairement sur le manchon 10 et la tige-pivot 2 un couple de maintien ou de manoeuvre en rotation de la tige-pivot 2 par rapport audit embout 6.

## Revendications

1. Biellette (1) pour mécanisme de liaison au sol d'un véhicule, du genre biellette de direction, biellette de suspension, ou biellette de stabilisation destinée par exemple à l'articulation d'une barre anti-roulis, ladite biellette (1) comprenant une tige (2) qui relie un premier élément d'articulation (3), destiné à venir assurer le raccordement et l'articulation de ladite biellette (1) sur un organe de manoeuvre ou un organe de retenue, du genre crémaillère de direction ou attache de châssis, à un second élément d'articulation (7), destiné à permettre le raccordement et l'articulation de ladite biellette (1) sur un organe effecteur, tel qu'un porte-fusée ou une barre anti-roulis, le premier élément d'articulation (3) et le second élément d'articulation (7) étant fixés sur ladite tige (2), à distance l'un de l'autre, respectivement par une première interface de fixation (5) et par une seconde interface de fixation (6), ladite biellette (1) étant **caractérisée en ce que** la tige (2) est étagée de sorte à présenter longitudinalement au moins un tronçon de tête (11) puis un tronçon de queue (12) plus fin que ledit tronçon de tête (11), et **en ce que** ladite biellette comprend un manchon de renfort (10) intermédiaire, distinct des éléments d'articulation (3, 7) et des interfaces de fixation (5, 6), qui est rapporté et engagé sur une portion (T) de la longueur de la tige (2) comprise entre le premier élément d'articulation (3) et le second élément d'articulation (7), en étant enfilé sur le tronçon de queue (12), de sorte à pouvoir renforcer localement la section transverse de ladite tige (2).

2. Biellette (1) selon la revendication 1 **caractérisé en ce que** la tige (2) forme une tige-pivot (2) sur laquelle est fixé un premier élément de rotule (3) formant le premier élément d'articulation, destiné à venir assurer le raccordement et l'articulation de ladite biellette, par une première liaison rotule (4), sur l'organe de manoeuvre ou sur l'organe de retenue, ladite tige-pivot (2) étant agencée pour matérialiser un pivot de ladite première liaison rotule et reliant ledit premier élément de rotule (3) à un second élément de rotule (7), formant le second élément d'articulation, destiné à permettre le raccordement et l'articulation de ladite biellette sur l'organe effecteur.

3. Biellette selon la revendication 1 ou 2 **caractérisée en ce que** le manchon (10) possède une longueur (L10) supérieure ou égale à une fois, à 1,5 fois, à deux fois, voire à trois fois le diamètre de base (D_{T}) du tronçon (T) de la tige-pivot (2) sur lequel ledit manchon est engagé, et de préférence inférieure ou égale à cinq fois, voire à dix fois ledit diamètre de base (D_{T}).

4. Biellette (1) selon l'une des revendications précédentes **caractérisée en ce que** l'une et/ou l'autre des interfaces de fixation (5, 6), de préférence la seconde interface de fixation (6), est formée par un embout (6) rapporté et fixé sur la tige (2), et de préférence amovible, qui porte l'élément d'articulation (3, 7) correspondant.

5. Biellette (1) selon la revendication 4 **caractérisée en ce que** le manchon (10) est formé par un élément tubulaire monolithique.

6. Biellette selon la revendication 4 ou 5 **caractérisée en ce que** l'embout (6) portant l'élément d'articulation (7), de préférence un second élément de rotule, présente un trou taraudé (13) qui reçoit une extrémité filetée mâle (14) correspondante de la tige-pivot (2) pour assurer la fixation dudit embout (6) sur ladite tige (2).

7. Biellette selon la revendication 6 **caractérisée en ce que** le manchon (10) est venu de matière avec un contre-écrou (15) qui est lui-même vissé sur l'extrémité mâle filetée (14) de la tige-pivot (2) de sorte à épauler l'embout (6) portant l'élément d'articulation (7).

8. Biellette selon la revendication 7 **caractérisé en ce que** l'alésage interne du manchon (10) présente un diamètre supérieur à celui (D_{T}) de la portion (T) de la tige-pivot (2) sur lequel ledit manchon est enfilé, de sorte à préserver un jeu radial (J_{R}) entre ladite tige-pivot (2) et ledit manchon (10).

9. Biellette selon l'une des revendications précédentes **caractérisée en ce que** le manchon (10) est enfilé exclusivement sur le tronçon de queue (12).

10. Biellette selon l'une des revendications 4 à 6 **caractérisée en ce que** le manchon (10) est fixé sur la tige (2) à distance de l'embout (6) portant l'élément d'articulation (7), contre un épaulement (20) formé par le tronçon de tête (11).

11. Biellette selon l'une des revendications 1 à 6 ou 10 **caractérisée en ce que** le manchon (10) est monté radialement serré sur la tige (2).

12. Biellette selon l'une des revendications précédentes **caractérisée en ce que** le manchon (10) présente sur sa face externe une pluralité de méplats (21) répartis autour de son axe générateur.

13. Mécanisme de direction pour véhicule comprenant au moins un organe de manoeuvre, du genre crémaillère de direction, monté mobile, sous la dépendance d'un volant de conduite, dans un carter de direction destiné à être fixé sur un élément de châssis du véhicule, ledit mécanisme de direction étant **caractérisé en ce qu'il** comporte au moins une biellette de direction (1) selon l'une des revendications 1 à 12, dont le premier élément d'articulation (3) assure la jonction et l'articulation avec ledit organe de manoeuvre, et dont le second élément d'articulation (7) est agencé pour permettre le raccordement et l'articulation de ladite biellette sur un organe effecteur qui forme un support orientable d'un organe directeur, du genre porte-fusée.

14. Véhicule, notamment véhicule automobile, équipé d'au moins une biellette (1) selon l'une des revendications 1 à 12 et/ou d'un mécanisme de direction selon la revendication 13.

15. Procédé de fabrication d'une biellette (1) comprenant une étape (a) de réalisation d'une tige-pivot (2) au cours de laquelle on rapporte ou l'on façonne à la première extrémité d'une tige (2), qui est étagée de sorte à présenter longitudinalement au moins un tronçon de tête (11) puis un tronçon de queue (12) plus fin que ledit tronçon de tête (11), un premier élément de rotule (3) dont ladite tige forme le pivot, une étape (c) de renforcement au cours de laquelle on rapporte et on enfile sur une portion (T) de ladite tige-pivot, sur ledit tronçon de queue (12), un manchon de renfort (10), puis une étape (d) de mise en place d'un second élément de rotule, au cours de laquelle on rapporte sur la seconde extrémité (14) de la tige (2) correspondant au tronçon de queue (12) un embout (6) distinct du manchon de renfort (10) et portant un second élément de rotule (7).

## Patentansprüche

1. Schubstange (1) für Mechanismus zur Bodenverbindung eines Fahrzeugs vom Typ Lenkschubstange, Aufhängungsschubstange oder Stabilisierungsschubstange, ausgelegt z.B. zum Gelenk eines Stabilisatorstabs, wobei die Schubstange (1) einen Schaft (2) umfasst, der ein erstes Gelenkelement (3) verbindet, das ausgelegt ist, um den Anschluss und das Gelenk der Schubstange (1) auf einem Betätigungs- oder einem Rückhalteorgan vom Typ Lenkzahnstange oder Chassisbefestigung an ein zweites Gelenkelement (7) zu sichern, das ausgelegt ist, um den Anschluss und das Gelenk der Schubstange (1) auf einem Effektor wie z.B. einem Achsschenkel oder einem Stabilisatorstab zu ermöglichen, wobei das erste Gelenkelement (3) und das zweite Gelenkelement (7) auf dem Schaft (2) voneinander beabstandet jeweils durch eine erste Befestigungsschnittstelle (5) und durch eine zweite Befestigungsschnittstelle (6) befestigt sind, wobei die Schubstange (1) **dadurch gekennzeichnet ist, dass** der Schaft (2) mehrstufig ist, so dass er der Länge nach mindestens einen Kopfabschnitt (11) aufweist, dann einen Endabschnitt (12), der dünner als der Kopfabschnitt (11) ist, und dadurch, dass die Schubstange eine Zwischen-Verstärkungsmanschette (10) umfasst, die verschieden von den Gelenkelementen (3, 7) und den Befestigungsschnittstellen (5, 6) ist, die auf einem Abschnitt (T) der Länge des Schafts (2) aufgesetzt und eingegriffen ist, der zwischen dem ersten Gelenkelement (3) und dem zweiten Gelenkelement (7) enthalten ist, wobei die Verstärkungsmanschette auf dem Endabschnitt (12) aufgereiht ist, um lokal den Querabschnitt des Schafts (2) verstärken zu können.

2. Schubstange (1) nach Anspruch 1, **dadurch gekennzeichnet, dass** der Schaft (2) einen Drehschaft (2) bildet, auf dem ein erstes Kugelgelenkelement (3) befestigt ist, das das erste Gelenkelement bildet, das ausgelegt ist, um den Anschluss und das Gelenk der Schubstange durch eine erste Kugelverbindung (4) auf dem Betätigungsorgan oder auf dem Rückhalteorgan sicherzustellen, wobei der Drehschaft (2) angeordnet ist, um eine Drehachse der ersten Kugelverbindung zu bilden und das erste Kugelgelenkelement (3) mit einem zweiten Kugelgelenkelement (7) zu verbinden, das das zweite Gelenkelement bildet, das ausgelegt ist, um den Anschluss und das Gelenk der Schubstange auf dem Effektor zu ermöglichen.

3. Schubstange nach Anspruch 1 oder 2, **dadurch gekennzeichnet, dass** die Manschette (10) eine Länge (L10) aufweist, die größer als oder gleich ein Mal, 1,5 Mal, zwei Mal, ja sogar drei Mal der/dem Basisdurchmesser (D_{T}) des Abschnitts (T) des Drehschafts (2) ist, auf dem die Manschette eingegriffen ist, und vorzugsweise kleiner als oder gleich fünf Mal, ja sogar zehn Mal der/dem Basisdurchmesser (D_{T}).

4. Schubstange (1) nach einem der vorhergehenden Ansprüche, **dadurch gekennzeichnet, dass** die eine und/oder die andere der Befestigungsschnittstellen (5, 6), vorzugsweise die zweite Befestigungsschnittstelle (6), aus einem Ansatzstück (6) gebildet ist, das auf dem Schaft (2) aufgesetzt und befestigt ist, und vorzugsweise abnehmbar, das das entsprechende Gelenkelement (3, 7) trägt.

5. Schubstange (1) nach Anspruch 4, **dadurch gekennzeichnet, dass** die Manschette (10) aus einem monolithischen rohrförmigen Element gebildet ist.

6. Schubstange nach Anspruch 4 oder 5, **dadurch gekennzeichnet, dass** das Ansatzstück (6), das das Gelenkelement (7) trägt, vorzugsweise ein zweites Kugelgelenkelement, ein gewindegeschnittenes Loch (13) aufweist, das ein Außengewindeende (14) aufnimmt, das dem Drehschaft (2) entspricht, um die Befestigung des Ansatzstücks (6) auf dem Schaft (2) sicherzustellen.

7. Schubstange nach Anspruch 6, **dadurch gekennzeichnet, dass** die Manschette (10) einstückig mit einer Gegenmutter (15) ist, die selbst auf das Außengewindeende (14) des Drehschafts (2) geschraubt ist, um das Ansatzstück (6), das das Gelenkelement (7) trägt, in Auflage zu halten.

8. Schubstange nach Anspruch 7, **dadurch gekennzeichnet, dass** die Innenbohrung der Manschette (10) einen Durchmesser aufweist, der größer als derjenige (D_{T}) des Abschnitts (T) des Drehschafts (2) ist, auf dem die Manschette aufgereiht ist, um ein radiales Spiel (J_{R}) zwischen dem Drehschaft (2) und der Manschette (10) beizubehalten.

9. Schubstange nach einem der vorhergehenden Ansprüche, **dadurch gekennzeichnet, dass** die Manschette (10) ausschließlich auf dem Endabschnitt (12) aufgereiht ist.

10. Schubstange nach einem der Ansprüche 4 bis 6, **dadurch gekennzeichnet, dass** die Manschette (10) auf dem Schaft (2) in einem Abstand vom Ansatzstück (6), das das Gelenkelement (7) trägt, gegen eine Schulter (20) befestigt ist, die vom Kopfabschnitt (11) gebildet ist.

11. Schubstange nach einem der Ansprüche 1 bis 6 oder 10, **dadurch gekennzeichnet, dass** die Manschette (10) radial gegen den Schaft (2) fest montiert ist.

12. Schubstange nach einem der vorhergehenden Ansprüche, **dadurch gekennzeichnet, dass** die Manschette (10) auf ihrer Außenseite eine Vielzahl von Flachstellen (21) aufweist, die um ihre Generatorachse verteilt sind.

13. Steuermechanismus für Fahrzeug, umfassend mindestens ein Betätigungsorgan vom Typ Lenkzahnstange, die beweglich, in Abhängigkeit von einem Fahrsteuer, in einem Lenkgehäuse montiert ist, dazu ausgelegt, auf einem Element des Chassis des Fahrzeugs befestigt zu sein, wobei der Steuermechanismus **dadurch gekennzeichnet ist, dass** er mindestens eine Lenkschubstange (1) nach einem der Ansprüche 1 bis 12 umfasst, deren erstes Gelenkelement (3) die Verbindung und das Gelenk mit dem Betätigungsorgan sicherstellt, und deren zweites Gelenkelement (7) angeordnet ist, um den Anschluss und das Gelenk der Schubstange auf einem Effektor zu ermöglichen, der eine ausrichtbare Stütze eines Richtungsorgans vom Typ Achsschenkel bildet.

14. Fahrzeug, insbesondere Kraftfahrzeug, das mit mindestens einer Schubstange (1) nach einem der Ansprüche 1 bis 12 und/oder einem Steuermechanismus nach Anspruch 13 ausgestattet ist.

15. Verfahren zur Herstellung einer Schubstange (1), umfassend einen Schritt (a) des Durchführens eines Drehschafts (2), im Laufe dessen an das erste Ende eines Schafts (2), der mehrstufig ist, um längsgerichtet mindestens einen Kopfabschnitt (11) aufzuweisen, dann einen Endabschnitt (12), der dünner als der Kopfabschnitt (11) ist, ein erstes Kugelgelenkelement (3) aufgesetzt oder angebracht wird, wobei der Schaft die Drehachse des Kugelgelenkelements bildet, einen Schritt (c) des Verstärkens, im Laufe dessen auf einem Abschnitt (T) des Drehschafts, auf dem Endabschnitt (12), eine Verstärkungsmanschette (10) aufgesetzt und aufgereiht wird, dann einen Schritt (d) des Anbringens eines zweiten Kugelgelenkelements, im Laufe dessen auf dem zweiten Ende (14) des Schafts (2), der dem Endabschnitt (12) entspricht, ein Ansatzstück (6) aufgesetzt wird, das verschieden von der Verstärkungsmanschette (10) ist und ein zweites Kugelgelenkelement (7) trägt.

## Claims

1. A tie rod (1) for a ground connection mechanism of a vehicle, of the steering tie rod, suspension tie rod or stabilization tie rod type intended for example for the articulation of an anti-roll bar, said tie rod (1) comprising a shaft (2) which connects a first articulation element (3), intended to ensure the joining and the articulation of said tie rod (1) on an operating member or a retaining member, of the steering rack or frame clip type, to a second articulation element (7), intended to allow the joining and the articulation of said tie rod (1) on an effector member, such as a knuckle or an anti-roll bar, the first articulation element (3) and the second articulation element (7) being fixed on said shaft (2), apart from one another, respectively by a first fixing interface (5) and by a second fixing interface (6), said tie rod (1) being **characterized in that** the shaft (2) is stepped so as to have longitudinally at least one head section (11) then a tail section (12) thinner than said head section (11), and **in that** said tie rod comprises an intermediate reinforcing sleeve (10), separate from the articulation elements (3, 7) and from the fixing interfaces (5, 6), which is put in and engaged on a portion (T) of the length of the shaft (2) comprised between the first articulation element (3) and the second articulation element (7), while being slipped on the tail section (12), so as to be able to locally reinforce the cross section of said shaft (2).

2. The tie rod (1) according to claim 1 **characterized in that** the shaft (2) forms a pivot shaft (2) on which a first ball joint element (3) is fixed forming the first articulation element, intended to ensure the joining and the articulation of said tie rod, by a first ball joint connection (4), on the operating member or on the retaining member, said pivot shaft (2) being arranged to materialize a pivot of said first ball joint connection and connecting said first ball joint element (3) to a second ball joint element (7), forming the second articulation element, intended to enable the joining and the articulation of said tie rod on the effector member.

3. The tie rod according to claim 1 or 2 **characterized in that** the sleeve (10) has a length (L10) once, one and a half, twice, or even three times greater than or equal to the base diameter (D_{T}) of the section (T) of the pivot shaft (2) on which said sleeve is engaged, and preferably less than or equal to five times, even ten times, said base diameter (D_{T}).

4. The tie rod (1) according to any of the preceding claims **characterized in that** each or both of the fixing interfaces (5, 6), preferably the second fixing interface (6), is formed by a tip (6) attached and fixed on the shaft (2), and preferably removable, which carries the corresponding articulation element (3, 7).

5. The tie rod (1) according to claim 4 **characterized in that** the sleeve (10) is formed by a monolithic tubular element.

6. The tie rod according to claim 4 or 5, **characterized in that** the tip (6) carrying the articulation element (7), preferably a second ball joint element, has a threaded hole (13) which receives a corresponding threaded male end (14) of the pivot shaft (2) to ensure fixing said tip (6) on said shaft (2).

7. The tie rod according to claim 6 **characterized in that** the sleeve (10) is made of one piece with a counter nut (15) which is itself screwed onto the threaded male end (14) of the pivot shaft (2) so as to abut against the tip (6) carrying the articulation element (7).

8. The tie rod according to claim 7 **characterized in that** the inner bore of the sleeve (10) has a diameter greater than that (D_{T}) of the portion (T) of the pivot shaft (2) on which said sleeve is slipped, so as to preserve a radial clearance (J_{R}) between said pivot shaft (2) and said sleeve (10).

9. The tie rod according to any of the preceding claims **characterized in that** the sleeve (10) is exclusively slipped on the tail section (12).

10. The tie rod according to any of claims 4 to 6 **characterized in that** that the sleeve (10) is fixed on the shaft (2) apart from the tip (6) carrying the articulation element (7), against a shoulder (20) formed by the head section (11).

11. The tie rod according to any of claims 1 to 6 or 10 **characterized in that** the sleeve (10) is radially snug fit on the shaft (2).

12. The tie rod according to any of the preceding claims **characterized in that** the sleeve (10) has on its outer face a plurality of flat surfaces (21) distributed about its generating axis.

13. A steering mechanism for a vehicle comprising at least one operating member, of the steering rack type, movably mounted, under the control of a steering wheel, in a steering casing intended to be fixed on a frame element of the vehicle, said steering mechanism being **characterized in that** it includes at least one steering tie rod (1) according to any of claims 1 to 12, the first articulation element (3) of which ensures the junction and the articulation with said operating member, and the second articulation element (7) of which is arranged to allow the joining and the articulation of said tie rod on an effector member which forms a swiveling support of a steered member, of the knuckle type.

14. A vehicle, in particular a motor vehicle, equipped with at least one tie rod (1) according to any of claims 1 to 12 and/or of a steering mechanism according to claim 13.

15. A method of manufacturing a tie rod (1) comprising a step (a) of realizing a pivot shaft (2) during which is attached or shaped to the first end of a shaft (2), which is stepped so as to longitudinally present at least one head section (11) then a tail section (12) thinner than said head section (11), a first ball joint element (3), whose said shaft forms the pivot, a reinforcement step (c) during which a reinforcing sleeve (10) is put in and slipped on a portion (T) of said pivot shaft, on said tail section (12), then a step (d) of setting a second ball joint element, during which a tip (6) separate from the reinforcing sleeve (10) and carrying a second ball joint element (7) is attached on the second end (14) of the shaft (2) corresponding to the tail section (12).
